# EUROPÄISCHE PATENTSCHRIFT

(11) **EP 2 208 624 B1**
(45) Veröffentlichungstag und Bekanntmachung des Hinweises auf die Patenterteilung: **18.04.2018**
(21) Anmeldenummer: 10150622.8
(22) Anmeldetag: 13.01.2010
(51) Int. Cl.: B60G 17/052, B60G 17/015

(54) **Anhänger-Luftfederanlage mit Höhenbegrenzung**
Trailer pneumatic suspension with height limit
Installation de ressort pneumatique de remorque doté d'une limitation en hauteur

(30) Priorität: 20.01.2009 DE 102009005229
(43) Veröffentlichungstag der Anmeldung: 21.07.2010
(73) Patentinhaber: Haldex Brake Products Aktiebolag, 261 24 Landskrona (SE)
(72) Erfinder: Sulzyc, Georg, 68305 Mannhelm (DE); Genthner, Horst, 67069 Ludwigshafen (DE)
(74) Vertreter: REHBERG HÜPPE + PARTNER

(56) Entgegenhaltungen:
- EP-A2- 0 170 794
- DE-A1- 4 202 729
- DE-C1- 19 944 873
- US-A1- 2007 120 334
- US-B1- 6 431 557

## Beschreibung

### TECHNISCHES GEBIET DER ERFINDUNG

Die vorliegende Erfindung betrifft eine Anhänger-Luftfederanlage mit einem manuell betätigbaren Hebe-Senk-Ventil. Nach Wunsch eines Benutzers kann bei einer derartigen Anhänger-Luftfederanlage ein dieser zugeordneter Fahrzeugaufbau angehoben werden, indem eine Luftfeder der Anhänger-Luftfederanlage mit einer Druckluftquelle verbunden wird. Ein Absenken des Fahrzeugaufbaus erfolgt, indem eine Druckluftsenke mit der Luftfeder verbunden wird.

### STAND DER TECHNIK

Aus DE 44 16 280 C1 ist eine Luftfederanlage bekannt, bei der ein manuell betätigbares Hebe-Senk-Ventil zwischen eine Luftfeder und ein Niveauregelventil zwischengeschaltet ist. In einer Stellung "HEBEN" des Hebe-Senk-Ventils ist die als Behälter ausgebildete Druckluftquelle über das Niveauregelventil und das Hebe-Senk-Ventil mit der Luftfeder verbunden. Erreicht das Niveau des Fahrzeugs während des Hebevorgangs eine Abschlussstellung, für die das Niveau der Luftfeder und des Fahrzeugaufbaus einen oberen Schwellwert erreicht, wird ein Ventil in dem Niveauregelventil geschlossen, wodurch die Druckluftversorgung von dem Behälter über das Niveauregelventil und das Hebe-Senk-Ventil zu der Luftfeder unterbrochen wird. Will der Fahrer nach dem Erreichen der Abschlussstellung wieder den Fahrzeugaufbau absenken, kann dieser das Hebe-Senk-Ventil in die Stellung "SENKEN" bewegen.

Aus den Druckschriften DE 42 02 729 C2 sowie DE 41 20 824 C1 ist ein Hebe-Senk-Ventil mit zugeordneter Steuereinheit bekannt, bei welchem die Steuereinheit automatisiert die Aufnahme eines Fahrbetriebs erkennt und ggf. das Hebe-Senk-Ventil aus einer Stellung "STOPP" in eine Stellung "FAHRT" überführt. Vorzugsweise ist die Steuereinheit multifunktional ausgebildet, indem diese auch als ABS- oder EBS-Steuereinheit dient.

Aus DE 199 44 873 C1 ist eine Luftfederanlage bekannt, bei welcher eine Regelung des Niveaus der Luftfederanlage in einem primären Leitungszweig über elektrisch angesteuerte Ventile erfolgt, insbesondere über ein elektromagnetisches Sperrventil sowie ein elektromagnetisches 3/2-Wegeventil, die zwischen den Behälter und die Luftfeder zwischengeordnet sind. Für den Ausfall dieses primären elektrisch betätigten Zweigs kommt eine Rückfallebene zum Einsatz, für welche eine Verbindung des Behälters mit der Luftfeder über ein mechanisches Niveauregelventil erfolgt, welches insbesondere einen integrierten Wegsensor für die Erfassung des Niveaus besitzt. Darüber hinaus ist in der Druckschrift die Integration eines manuell betätigten Hebe-Senk-Ventils in dem sekundären Leitungszweig offenbart. Dieses Hebe-Senk-Ventil besitzt allerdings keine Höhenbegrenzung. An einem Verzweigungspunkt zwischen den beiden genannten Leitungszweigen ist ein 3/2-Wegeventil angeordnet, welches stromlos automatisch in eine Schaltstellung verbracht wird, welche den sekundären Leitungszweig aktiviert, während für Bestromung des 3/2-Magnetventils der primäre Leitungszweig aktiviert wird. In dem elektrisch betätigten primären Leitungszweig kann eine willkürlich manuell betätigte Auslösung eines Hebe- oder Senkvorgangs erfolgen über einen Wahlschalter, den der Benutzer der Luftfederanlage manuell betätigen kann. Ein elektrisches Ausgangssignal dieses Wahlschalters wird der Steuereinrichtung zugeführt, die dann geeignet die elektromagnetisch betätigten Ventile des primären Leitungszweigs beaufschlagt.

Die nicht gattungsgemäße Druckschrift US 2007/0120334 A1 betrifft größere Mobilitätsfahrzeuge wie Campingbusse oder Wohnmobile, Wohnwagen, Krankenwagen, fahrbare Geschützplattformen oder militärische und zivile Personentransportfahrzeuge, bei welchen das Niveau einer Luftfederanlage verändert werden soll mit dem Ziel einer Beibehaltung einer Ausrichtung des Fahrzeugaufbaus entsprechend einem künstlichen Horizont. Als bekannt werden hierbei Systeme beschrieben, bei welchen eine Orientierung des Chassis gegenüber den Achsen ausgeregelt wird, wobei diese Orientierung üblicherweise nicht automatisiert während einer Niveauänderung beibehalten werden kann, wenn beispielsweise ein Anheben des Chassis des Wohnmobils wünschenswert ist, um eine Zutrittstreppe in vorgegebener Höhe über dem Untergrund auszuklappen. US 2007/0120334 A1 schlägt vor, die Steuerung der Druckbeaufschlagung der Luftfederbälge über eine die Luftfederbälge selektiv be- und entlüftende Ventilbaugruppe zu steuern, welche elektrisch durch eine Steuereinheit gesteuert ist. Das Fahrzeug besitzt den Luftfederbälgen zugeordnete Höhensensoren, deren Höhensignal der Steuereinheit zugeführt wird. Eine maximale Höhe kann der Steuereinheit über ein "end-of-travel-Signal" des Höhensensors zugeführt werden oder in der Steuereinheit auf Grundlage des Signals des Höhensensors durch einen Vergleich mit in der Steuereinheit gespeicherten "end-of-travel-Werten" ermittelt werden. Eine Höhenveränderung kann von dem Fahrer durch Betätigung eines mit der Steuereinheit verbundenen elektrischen Schalters verursacht werden. Über einen Ausrichtschalter kann ein Steuerverfahren zur Ausrichtung des Fahrzeugaufbaus mit dem künstlichen Horizont aktiviert und deaktiviert werden. Eine gleichzeitige Betätigung des Höhenschalters sowie des Ausrichtschalters führt dazu, dass eine Veränderung der Höhe unter Beibehaltung der Ausrichtung des Fahrzeugaufbaus zu dem künstlichen Horizont erfolgt. Die Ausrichtung zu dem künstlichen Horizont erfolgt auf Grundlage der Erfassung einer aktuellen Ausrichtung durch einen Ausrichtsensor, dessen Signal der Steuereinheit zugeführt wird. Erreicht das Wohnmobil einen Campingplatz o. ä., betätigt der Fahrer den Ausrichtschalter, wodurch veranlasst wird, dass auf Grundlage des Signals des Ausrichtsensors eine Ausrichtung des Chassis des Wohnmobils mit dem künstlichen Horizonts erfolgt. Hierzu ermittelt die Steuereinheit das Ausmaß, in welchem die Ausrichtung von dem künstlichen Horizont abweicht. In einem folgenden Verfahrensschritt wird ermittelt, ob das Ausmaß der Abweichung größer ist als die Kapazität des Systems, eine Änderung der Ausrichtung herbeizuführen. Ist dies der Fall, wird dem Fahrer über ein Signal zur Kenntnis gebracht, dass die Luftfederanlage nicht in der Lage ist, einen Ausgleich einer Neigung des Untergrunds durch Betätigung der Luftfederanlage derart vorzunehmen, dass der Aufbau des Wohnmobils mit dem künstlichen Horizont ausgerichtet werden kann. Hierdurch veranlasst parkt der Fahrer das Wohnmobil auf einen weniger geneigten Untergrund um. Ist hingegen das Ausmaß der Abweichung in einem Bereich, in welchem ein Ausgleich durch Veränderung der Druckbeaufschlagung der Luftfederanlage möglich ist, ermittelt die Steuereinheit, welche Seite des Wohnmobils oberhalb des künstlichen Horizonts liegt. Für die ermittelte Seite wird anschließend geprüft, ob die gewünschte Ausrichtung durch Absenkung dieser Seite erfolgen kann. Ist dies der Fall, erfolgt die Absenkung dieser Seite durch Entlüftung der zugeordneten Luftfederbälge. Ermittelt hingegen die Steuereinheit, dass die mögliche Absenkung der Seite nicht ausreichend ist, um die Ausrichtung mit dem künstlichen Horizont herbeizuführen, prüft die Steuereinheit in einem nächsten Schritt, ob die Ausrichtung mit dem künstlichen Horizont herbeigeführt werden kann durch Belüftung der Luftfederbälge der anderen Seite. Ist dies der Fall, erfolgt die Ausrichtung durch Belüftung der Luftfederbälge der anderen Seite. Anderenfalls erfolgt die Rückmeldung an den Fahrer, dass das System nicht in der Lage ist, die gewünschte Ausrichtung herbeizuführen. Die Herbeiführung der gewünschten Ausrichtung durch eine Entlüftung der höheren Seite ist bevorzugt, da diese nicht zu einem Verbrauch von Druckluft führt. Angesprochen ist in US 2007/0120334 A1 auch, dass die Ausrichtung durch Kombination einer Entlüftung der höheren Seite des Fahrzeugs und Belüftung der niedrigeren Seite des Fahrzeugs erfolgt. Nach vorgegebenen Zeitintervallen, beispielsweise nach einer oder zwei Stunden, wird durch die Steuereinheit geprüft, ob der Fahrzeugaufbau immer noch innerhalb eines vorbestimmten Bereichs um die gewünschte Ausrichtung ausgerichtet ist. Ist dies der Fall, wird diese Ausrichtung dem Benutzer angezeigt, und ein Timer für eine weitere Prüfung für die Beibehaltung der Ausrichtung wird gestartet. Anderenfalls erfolgt eine Veränderung der Ausrichtung, wobei dies dem Fahrer angezeigt werden kann. Betätigt für ausgerichtetes Fahrzeug der Fahrer den Höhenschalter für die Veränderung einer Höhe, prüft die Steuereinheit zunächst, ob die Luftfederanlage in der Lage ist, die Veränderung der Höhe herbeizuführen. Hierbei erfolgt durch die Steuereinheit ein Vergleich einer zur Umsetzung des Wunsches des Fahrers erforderlichen Zielhöhe mit einer abgespeicherten "end-of-travel-Höhe". Liegt die von dem Fahrer angewählte Zielhöhe außerhalb der "end-of-travel-Höhe", wird dem Fahrer angezeigt, dass die gewünschte Höhenänderung nicht herbeiführbar ist. Das System basiert somit darauf, dass vor der Be- und Entlüftung von Luftfederbälgen zunächst durch die Steuereinheit geprüft wird, ob eine gewünschte Änderung der Ausrichtung und/oder Höhe überhaupt herbeiführbar ist und dass eine Be- und Entlüftung nur dann erfolgt, wenn mit dieser das gewünschte Ziel erreicht werden kann.

### AUFGABE DER ERFINDUNG

Der Erfindung vorliegenden liegt die Aufgabe zugrunde, eine einfach aufgebaute Anhänger-Luftfederanlage vorzuschlagen, mittels welcher eine automatische Wegbegrenzung für einen Hebe- und/oder Senkbetrieb ermöglicht ist.

### LÖSUNG

Die Aufgabe der Erfindung wird erfindungsgemäß mit den Merkmalen des unabhängigen Patentanspruchs 1 gelöst. Weitere Ausgestaltungen dieser Lösung ergeben sich entsprechend den abhängigen Patentansprüchen 2 bis 10.

### BESCHREIBUNG DER ERFINDUNG

Die vorliegende Erfindung beruht zunächst auf der Erkenntnis, dass der Einsatz eines Niveauregelventils mit einer mechanisch-pneumatischen Höhenbegrenzung den Einsatz eines verhältnismäßig komplexen Bauelements erfordert.

Darüber hinaus sind derartige Niveauregelventile mit Höhenbegrenzung, beispielsweise wie aus dem eingangs angeführten Stand der Technik bekannt, mit einem Sitzventil gebildet, welches mit Annäherung an die Abschlussstellung zunehmend geschlossen wird. Diese Schließbewegung hat aber zur Folge, dass das Sitzventil für die Zuführung des Drucks von der Druckluftquelle, insbesondere dem Behälter, eine Art Drossel bildet. Die hervorgerufene Drosselwirkung hat zur Folge, dass bei bekannten Anhänger-Luftfederanlagen eine Verlangsamung des Anhebens des Fahrzeugaufbaus erfolgt, wenn sich der Fahrzeugaufbau der Abschlussstellung annähert.

Ein weiterer Nachteil der an sich bekannten Anhänger-Luftfederanlagen mit mechanischpneumatischer Höhenbegrenzung ist, dass das vorgenannte Sitzventil seine Schließstellung genau dann erreichen muss, wenn ein gewünschtes Niveau des Fahrzeugaufbaus erreicht ist. Dies macht eine exakte Justage bzw. Anpassung des Niveauregelventils mit Höhenbegrenzung an die Einbaubedingungen erforderlich.

Darüber hinaus hat sich gezeigt, dass für die bekannten Anhänger-Luftfederanlagen u. U. nachteilig ist, dass über parallele Leitungsstränge einerseits der Ausgangsdruck des Niveauregelventils dem Hebe-Senk-Ventil zugeführt werden muss und andererseits der Ausgangsdruck der Begrenzungseinrichtung dem Hebe-Senk-Ventil zugeführt werden muss.

Schließlich hat die Erfindung erkannt, dass die an sich bekannten Anhänger-Luftfederanlagen mit Niveauregeleinrichtung und Höhenbegrenzung lediglich das Erreichen der Abschlussstellung in Richtung "HEBEN" gewährleisten, während üblicherweise eine entsprechende Überwachung für ein Senken des Fahrzeugaufbaus nicht erfolgt. Eine entsprechende Realisierung einer derartigen Überwachung über eine mechanisch-pneumatische Einrichtung würde zu einer Erhöhung der Komplexität des Bauaufwands für das Niveauregelventil mit Begrenzungseinrichtung führen.

Vor dem Hintergrund dieser Erkenntnisse schlägt die Erfindung vor, dass einer elektronischen Steuereinrichtung ein Messsignal des Niveaus zugeführt wird. Somit erfolgt nicht (ausschließlich) die mechanische Verarbeitung einer Niveauänderung, sondern vielmehr erfolgt eine Erfassung einer elektrischen Messgröße für das Niveau bzw. eine Niveauänderung. Hierbei kann zur Erfassung des Niveaus ein beliebiger Sensor Einsatz finden, insbesondere ein auf einem Potentiometer basierender Sensor, eine Ultraschall-Technologie, die Messung einer Verformung eines mit einer Veränderung des Niveaus verformten Federelements, beispielsweise unter Einsatz eines DMS, ein berührungsloser oder optischer Sensor, kapazitiv arbeitende Sensoren o. ä. Lediglich beispielhaft wird auf die aus EP 1 335 840 B1 bekannten Ausführungsformen von unterschiedlichen Sensoren zur Erfassung eines Niveaus hingewiesen.

Ein von einem derartigen Sensor erfasstes Messsignal wird der Steuereinrichtung zugeführt, die wiederum unter entsprechender Verarbeitung eine Ventileinrichtung ansteuert, wobei diese Ansteuerung als unmittelbare elektrische Ansteuerung oder als elektrische Vorsteuerung ausgebildet sein kann. Erfindungsgemäß ist die derart angesteuerte Ventileinrichtung so ausgebildet und in die Anhänger-Luftfederanlage integriert, dass über diese die Änderung des Niveaus beeinflussbar ist, worunter jedwede Möglichkeit der Einflussnahme auf die Befüllung der Luftfedern gemeint sein soll. Insbesondere handelt es sich bei der Beeinflussung der Änderung des Niveaus durch die Ventileinrichtung um die Unterbrechung eines Befüllungsvorgangs und/oder eines Entlüftungsvorgangs der Luftfeder.

Die Ventileinrichtung kann beispielsweise als Magnetventil, insbesondere als 2/2-Wegeventil oder Sperrventil, ausgebildet sein.

Um eine Begrenzung bzw. Überwachung einer Abschlussstellung zu gewährleisten, wird erfindungsgemäß in der Steuereinrichtung das Messsignal für das Niveau der Luftfeder bzw. des Fahrzeugaufbaus mit Schwellwerten verglichen, die einem maximalen Niveau und/oder einem minimalen Niveau entsprechen. Derartige Schwellwerte können
- a priori in der Steuereinheit abgelegt sein,
- bei Inbetriebnahme des Nutzfahrzeugs erlernt werden,
- eingegeben werden und/oder
- im Betrieb angepasst werden.

Ebenfalls möglich ist, dass in einer Speichereinheit nicht nur ein Schwellwert abgelegt ist, sondern vielmehr eine Vielzahl unterschiedlicher Schwellwerte abgelegt ist. Hierbei können die einzelnen unterschiedlichen Schwellwerte korrelieren mit unterschiedlichen Betriebssituationen der Anhänger-Luftfederanlage, beispielsweise Ausstattungen der Anhänger-Luftfederanlage oder des Nutzfahrzeugs, Beladungszuständen u. ä. Ebenfalls möglich ist, dass die unterschiedlichen Schwellwerte unterschiedlichen geodätischen Orten des Fahrzeugs zugeordnet sind. Beispielsweise können diese mit unterschiedlichen Höhen von Laderampen korrelieren. Nähert sich das Fahrzeug somit einer bestimmten Laderampe an, kann der Fahrer manuell den geeigneten Schwellwert auswählen. Ebenfalls denkbar ist, dass beispielsweise über ein GPS-System automatisiert die Position des Fahrzeugs erkannt wird und den unterschiedlichen Schwellwerten die entsprechende Position zugeordnet ist. Somit kann die Steuereinheit automatisiert erkennen, welcher Schwellwert für eine Annäherung an eine Laderampe mit bekannter Höhe auszuwählen ist. Hierdurch kann eine erhöhte Automatisierung und automatische Anpassung an unterschiedliche Rampenhöhen erfolgen. ebenfalls denkbar ist, dass für unterschiedliche Achsen oder Seiten des Fahrzeugs unterschiedliche Schwellwerte vorhanden sind.

Detektiert die Steuereinrichtung, dass ein Schwellwert durch das Messsignal erreicht wird, steuert die Steuereinheit die Ventileinrichtung so an, dass eine weitere Veränderung des Niveaus nicht erfolgt, also de facto eine Höhenbegrenzung stattfindet. In abgewandelter Ausführungsform ist es ebenfalls möglich, dass mit dem Erreichen des Schwellwerts die Ventileinrichtung durch die Steuereinrichtung so angesteuert wird, dass eine Veränderung des Niveaus automatisiert so erfolgt, dass sich das Niveau wieder um eine gewisse Distanz von dem Schwellwert weg bewegt. Für eine besonders einfache Ausgestaltung kann dies dadurch erfolgen, dass das Hebe-Senk-Ventil automatisiert in Richtung der Stellung "STOPP" bzw. "FAHRT" betätigt wird, also eine mittlere Höhe des Niveaus eingenommen wird.

Bei der erfindungsgemäßen Anhänger-Luftfederanlage ist stromaufwärts des Hebe-Senk-Ventils ein Niveauregelventil angeordnet. Für die erfindungsgemäße Ausgestaltung ist das Niveauregelventil insbesondere ohne mechanisch-pneumatische Höhenbegrenzung ausgestaltet, so dass erfindungsgemäß ein vereinfacht ausgebildetes Niveauregelventil Einsatz finden kann.

Eine weitere Ausgestaltung der Erfindung widmet sich der Situation, nachdem der Schwellwert erreicht worden ist und die Ventileinrichtung durch die Steuereinrichtung so angesteuert worden ist, dass eine Veränderung des Niveaus nicht erfolgt oder unterbrochen ist. Hierzu wird erfindungsgemäß in der Steuereinrichtung ein Indikator geprüft, der Aufschluss darüber gibt, ob eine Veränderung des Niveaus derart gewünscht ist, dass sich das Niveau wieder von dem erreichten Schwellwert weg bewegen soll. Beispielhaft kann dies wie folgt erläutert werden: hat der Fahrer das Hebe-Senk-Ventil in Richtung "HEBEN" betätigt und ist die Abschlussstellung erreicht mit dem Einwirken der Steuereinrichtung auf die Ventileinrichtung, überprüft der Indikator, ob das Hebe-Senk-Ventil durch den Fahrer wieder in Richtung "SENKEN" betätigt wird. Indiziert also der Indikator, dass eine Bewegung des Niveaus von dem erreichten Schwellwert wieder weg gewünscht ist, steuert die Steuereinrichtung automatisiert die Ventileinrichtung so an, dass die Unterbrechungswirkung oder Sperrwirkung aufgehoben ist und somit eine weitere Veränderung des Niveaus wieder erfolgen kann. Für das vorgenannte Beispiel bedeutet dies, dass nach Erreichen der Abschlussstellung durch entsprechende manuelle Betätigung des Hebe-Senk-Ventils der Fahrer manuell wieder ein Senken einleiten kann.

Erfindungsgemäß kann auch eine einfache Fehlbedienung durch den Fahrer vermieden werden, für die der Fahrer trotz Erreichen der zuvor erläuterten Abschlussstellung immer wieder das Hebe-Senk-Ventil in Richtung "HEBEN" betätigt, um immer wieder kleine Druckluftmengen zusätzlich der Luftfeder zuzuführen, bevor die Luftzufuhr durch die Steuereinrichtung unterbrochen wird: um dieses zu vermeiden, kann vorgesehen sein, dass nach dem Erreichen der Abschlussstellung, also dem Erreichen eines Schwellwerts, die Steuereinrichtung erst wieder ein "HEBEN" ermöglicht, wenn zuvor ein Betrieb des Hebe-Senk-Ventils durch den Fahrer initiiert worden ist, welches zu einem Senken des Fahrzeugaufbaus in einem zuvor definierten oder parametrisierten Ausmaß erfolgt ist. Entsprechendes kann für das Erreichen der Abschlussstellung "SENKEN" gelten.

In weiterer Ausgestaltung der Erfindung ist die von der Steuereinrichtung angesteuerte Ventileinrichtung zur Unterbrechung eines Hebens oder Senkens in eine Leitung zwischen Hebe-Senk-Ventil und Luftfeder zwischengeschaltet. Demgemäß kann durch den Benutzer unabhängig von dem aktuellen Niveau das Hebe-Senk-Ventil in eine Stellung "HEBEN" oder "SENKEN" verbracht werden, und es stellt sich ein entsprechender Ausgangsdruck des Hebe-Senk-Ventils zu der Luftfeder ein, der mit einer Befüllung oder einer Entlüftung der Luftfeder korrelieren kann. Allerdings kann über die zwischengeschaltete Ventileinrichtung in einer Sperrstellung derselben diese gewünschte Druckänderung, also ein Befüllen oder ein Entlüften, von der Luftfeder gezielt ferngehalten werden.

Für eine alternative Ausführungsform der Erfindung ist die Ventileinrichtung in einer Vorratsbehälterleitung angeordnet, die die Druckluftquelle, insbesondere den Behälter, mit dem Hebe-Senk-Ventil verbindet. Auf diese Weise kann mit einem herkömmlichen Magnetventil gängiger Bauart die gewünschte Funktion auf einfache Weise gewährleistet werden. U. U. ergibt sich auf diese Weise ein Aufbau, der grundsätzlich der pneumatischen Beaufschlagung des Hebe-Senk-Ventils für den Stand der Technik entspricht, bei welchem die Vorratsleitung über die Begrenzungseinrichtung des Niveauregelventils geführt ist, wobei allerdings die eingangs erläuterte Drosselwirkung und/oder die genannten Einstellungs- und Justagearbeiten vermieden werden können.

In weiterer Ausgestaltung der Erfindung ist die Ventileinrichtung mit dem Hebe-Senk-Ventil als eine Baueinheit ausgebildet, wodurch sich eine besonders kompakte Ausgestaltung ergibt und u. U. Kosten für die beteiligten Bauelemente reduziert werden können. U. U. wird durch diese Ausgestaltung auch ermöglicht, dass einzelne Bauelemente, wie ein Aktuator, multifunktional genutzt werden, nämlich einerseits für eine Betätigung des Hebe-Senk-Ventils und andererseits einer Betätigung der Ventileinrichtung.

Im Extremfall wäre es somit auch möglich und von der Erfindung umfasst, dass ein Hebe-Senk-Ventil zunächst von einem Benutzer über einen Schalter betätigt werden kann, der ein Signal an die Steuereinrichtung übermittelt, die damit Stellungen "HEBEN", "SENKEN" und "STOPP" des Hebe-Senk-Ventils über einen Aktuator ansteuert. Wird dann durch die Überwachung des Messsignals für das Niveau des Fahrzeugaufbaus erkannt, dass eine Abschlussstellung erreicht ist, muss die Steuereinrichtung dafür sorgen, dass der Aktuator derart angesteuert wird, dass das Hebe-Senk-Ventil automatisiert aus der Stellung "HEBEN" oder "SENKEN" in die Stellung "STOPP" oder eine zusätzliche Stellung, in welcher der Hebe- oder Senkvorgang unterbrochen wird, überführt wird.

Vorzugsweise ist in der erfindungsgemäßen Anhänger-Luftfederanlage die Druckluftquelle mit einem Behälter ausgebildet. Der Behälter kann in diesem Fall ein Entwässerungsventil besitzen, welches von der Steuereinrichtung ansteuerbar ist. Somit ist die Steuereinrichtung multifunktional ausgebildet, indem diese zusätzlich zu den genannten Funktionen auch die Ansteuerung des Entwässerungsventils übernimmt.

In weiterer Ausgestaltung dieses Lösungsgedankens erfasst die Steuereinrichtung den Umfang der durch das Niveauregelventil und/oder das Hebe-Senk-Ventil ausgelösten Hebevorgänge. Dieser Ausgestaltung liegt die Erkenntnis zugrunde, dass mit der Zunahme der Zahl der Hebevorgänge und/oder der Dauer derselben der Druckluftverbrauch in der Anhänger-Luftfederanlage ansteigt, also auch u. U. die in dem Behälter abgelagerte Feuchtigkeit, ansteigt. Erfindungsgemäß erfolgt eine Ansteuerung des Entwässerungsventils durch die Steuereinrichtung zur Entwässerung in Abhängigkeit von dem erfassten Umfang der Hebevorgänge. Vereinfacht gesagt bedeutet dies, dass für eine vorgegebene Anzahl von Hebevorgängen oder einem vorgegebenen Hebeumfang die Steuereinrichtung automatisiert dafür sorgt, dass eine Entwässerung des Behälters durchgeführt wird.

In weiterer Ausgestaltung der erfindungsgemäßen Anhänger-Luftfederanlage ist das Entwässerungsventil stromlos geschlossen, so dass für einen Einbruch der elektrischen Leistungsversorgung der geschlossene Zustand des Entwässerungsventils gesichert eingenommen wird. In alternativer Ausgestaltung kehrt das Entwässerungsventil stromlos in eine pneumatische Rückfallebene zurück.

Für einen besonderen Vorschlag der Erfindung erfüllt die Steuereinrichtung zusätzlich einen weiteren wesentlichen Zweck: für diesen Vorschlag der Erfindung ist die Steuereinrichtung, die
- für die Ansteuerung der Ventileinrichtung,
- für die Verarbeitung des Messsignals für das Niveau und
- ggf. für die Ansteuerung des Entwässerungsventils
zuständig ist, zusätzlich für die Gewährleistung der ABS- oder EBS-Bremsfunktion ausgebildet. U. U. kann dann ein ohnehin in dieser ABS- oder EBS-Steuereinrichtung vorliegendes Signal für die Ansteuerung der anderen Komponenten der Anhänger-Luftfederanlage verwendet werden. Lediglich beispielhaft soll der Fall erwähnt werden, dass ein Fahrzeug sich einer Ampel annähert mit einem Bremsvorgang, der für den Stillstand des Fahrzeugs dazu führt, dass das Fahrzeug eine schwankende Bewegung ausführt. Entsprechendes gilt bei einer plötzlichen Einleitung einer Kurvenfahrt. Wird durch die ABS- oder EBS-Steuereinrichtung erkannt, dass ein derartiger schwankender Vorgang vorliegt oder erfolgen wird, kann die erfindungsgemäße Ventileinrichtung in eine Sperrstellung verbracht werden, die zur Folge hat, dass das Niveauregelventil außer Kraft gesetzt wird. Hierdurch kann ein Befüllen und Entlüften der Luftfeder für die genannten schwankenden Vorgänge vermieden werden, was zu einem unerwünschten Druckluftverbrauch führen könnte.

Eine weitere Ausgestaltung der Erfindung ist darauf ausgerichtet, für das Annähern oder Erreichen der Abschlussstellung, also das Erreichen eines Schwellwerts, den Fahrer über diesen kritischen Zustand zu informieren: für diese Ausgestaltung der Erfindung wird von der Steuereinrichtung eine Signaleinrichtung angesteuert, wenn der Schwellwert für das Niveau erreicht wird. Die Ansteuerung erfolgt hierbei so, dass die Signaleinrichtung dem Benutzer signalisiert, dass ein Schwellwert des Niveaus erreicht wird. Hierbei kann die Signaleinrichtung beliebig ausgebildet sein. Beispielsweise kann die Signaleinrichtung ein pneumatisches Signal erzeugen, welches dazu führt, dass die Kraftverhältnisse an einem Bedienelement für das Hebe-Senk-Ventil verändert werden, so dass dem Benutzer eine haptische Rückmeldung gegeben wird, wenn die Abschlussstellung erreicht wird. Beliebige andere Ausgestaltungen sind ebenfalls möglich. Beispielsweise kann ein optisches Warnsignal aktiviert werden an beliebiger Stelle des Fahrzeugs oder im Bereich des Hebe-Senk-Ventils. Alternativ oder kumulativ kann ein akustisches Signal, wie beispielsweise ein Warnton, erzeugt werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in schematischer Detaildarstellung einen Anhänger im Bereich einer Achse mit Luftfeder.
- **Fig. 2**: zeigt den Anhänger gemäß Fig. 1 für ein vergrößertes Niveau des Fahrzeugaufbaus.
- **Fig. 3**: zeigt eine herkömmliche Luftfederanlage mit Hebe-Senk-Ventil und vorgeordnetem Niveauregelventil mit Begrenzungseinrichtung in schematischer Darstellung.
- **Fig. 4**: zeigt schematisch eine erfindungsgemäße Luftfederanlage, bei welcher eine elektrisch angesteuerte Ventileinrichtung in einer Leitung, die ein Hebe-Senk-Ventil speist, angeordnet ist.
- **Fig. 5**: zeigt schematisch eine weitere erfindungsgemäße Luftfederanlage, bei welcher eine elektrisch angesteuerte Ventileinrichtung und ein Hebe-Senk-Ventil als eine Baueinheit ausgebildet sind.
- **Fig. 6**: zeigt schematisch eine weitere erfindungsgemäße Luftfederanlage, bei welcher eine eine Ventileinrichtung ansteuernde Steuereinrichtung auch für die Ansteuerung eines Entwässerungsventils eines Behälters verantwortlich ist.
- **Fig. 7**: zeigt ein schematisches Blockschaltbild für ein Verfahren zum Betrieb der erfindungsgemäßen Luftfederanlage unter Gewährleistung eines maximalen und/oder minimalen Niveaus.
- **Fig. 8**: zeigt ein schematisches Blockschaltbild für ein Verfahren zur Ansteuerung eines Entwässerungsventils eines Behälters einer erfindungsgemäßen Luftfederanlage je nach Umfang einer Betätigung eines Hebe-Senk-Ventils.

### FIGURENBESCHREIBUNG

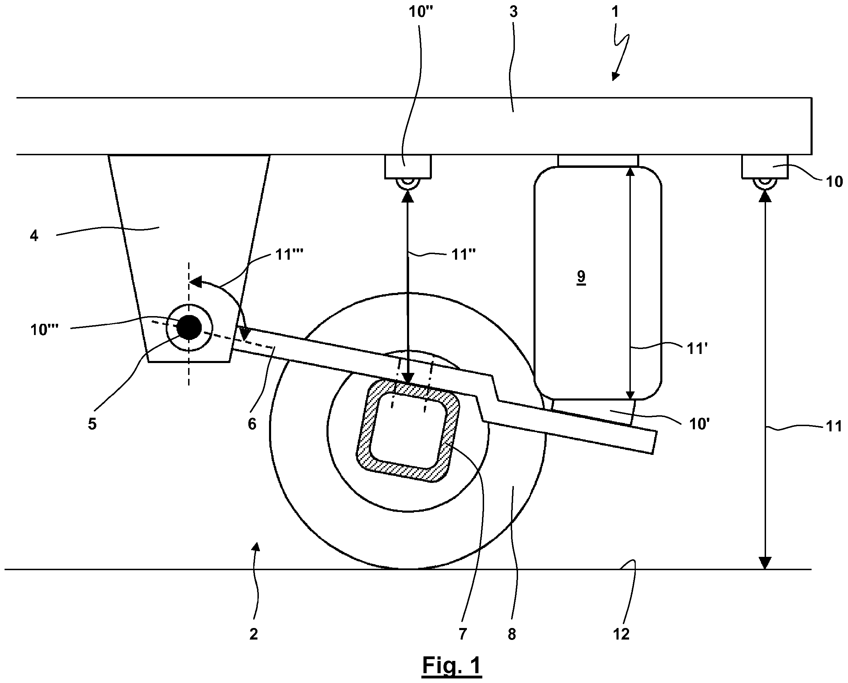

**Fig. 1** zeigt einen Anhänger 1 im Bereich einer Achse 2. Der Anhänger 1 besitzt einen Rahmen oder Fahrzeugaufbau 3, an dem starr ein Haltebock 4 befestigt ist. An dem Haltebock 4 ist verschwenkbar um eine quer zur Längsachse des Anhängers 1 orientierte Schwenkachse 5 ein Lenker 6 gelagert, von dem ungefähr mittig ein Achskörper 7 getragen ist. An dem Achskörper 7 sind wiederum drehbar die Fahrzeugräder 8 gelagert. In dem der Schwenkachse 5 gegenüberliegenden Endbereich ist der Lenker 6 über eine Luftfeder 9 an dem Fahrzeugaufbau 3 federnd abgestützt. Über einen Sensor 10 erfolgt eine Erfassung eines Niveaus 11. Wie in Fig. 1 skizziert kann der Sensor 10 am Fahrzeugaufbau 3 befestigt sein und als Niveau 11 die Höhe des Fahrzeugaufbaus 3 über der Fahrbahn 12 erfassen. Ebenfalls möglich ist, dass ein Sensor 10' im Bereich des Lenkers 6, der Luftfeder 9 oder des Fahrzeugaufbaus 3 angeordnet ist und als Niveau 11' die wirksame Länge der Luftfeder 9 erfasst oder einen Befüllungszustand der Luftfeder, also einen Druck oder ein Volumen. Weiterhin möglich ist, dass als Niveau 11" ein Sensor 10" den Abstand eines Fahrzeugrads 8 oder des Achskörpers 7, insbesondere im Bereich der Achsmitte oder des Differentials der Achse, erfasst. Schließlich kann ein Sensor 10'" als Drehwinkelsensor ausgebildet sein, so dass als Niveau 11'" ein Drehwinkel des Lenkers 6 gegenüber dem Haltebock 4 erfasst wird. Nähere Erläuterungen zu den einsetzbaren Messprinzipien, verwendbaren Messorten und Alternativen sind insbesondere den Druckschriften EP 1 335 840 B1, DE 10 2005 008 403 B4, EP 1 522 431 A2, DE 33 15 594 A1 und DE 199 02 768 C1 und den in diesen Druckschriften genannten weiteren Druckschriften zu entnehmen.

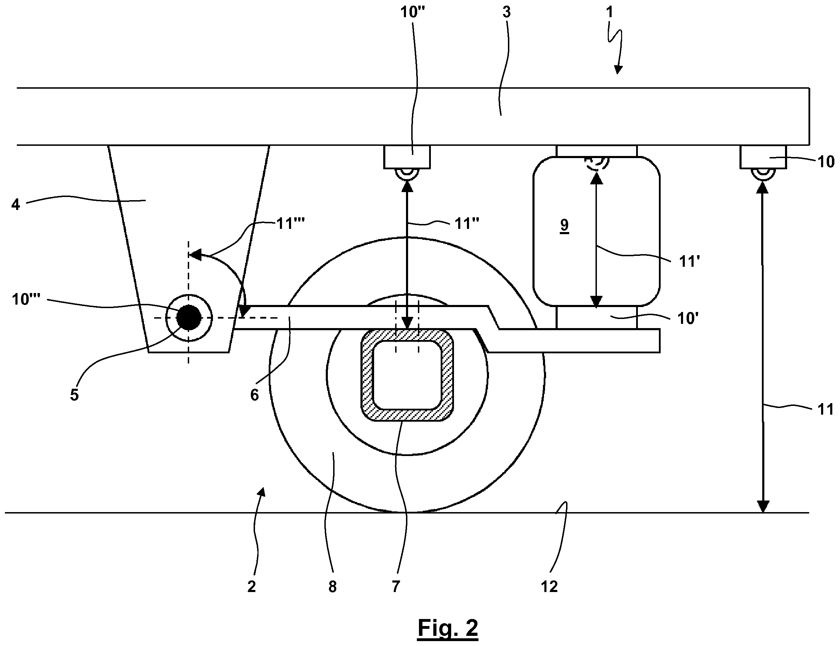

**Fig. 2** zeigt den Anhänger 1 gemäß Fig. 1 für verringertes Niveau 11, 11', 11", 11'", was insbesondere auf ein manuelles Senken des Fahrzeugaufbaus 3 infolge einer Betätigung eines Hebe-Senk-Ventils 13 oder eine zusätzliche Beladung des Fahrzeugs ohne Niveauausgleich zurückzuführen ist. Entsprechend ist ein Heben des Fahrzeugaufbaus 3 für den Übergang von der Stellung gemäß Fig. 2 in die Stellung gemäß Fig. 1 mit einem Befüllen der Luftfeder 9 oder dem Entladen des Fahrzeugs ohne Niveauausgleich gegeben.

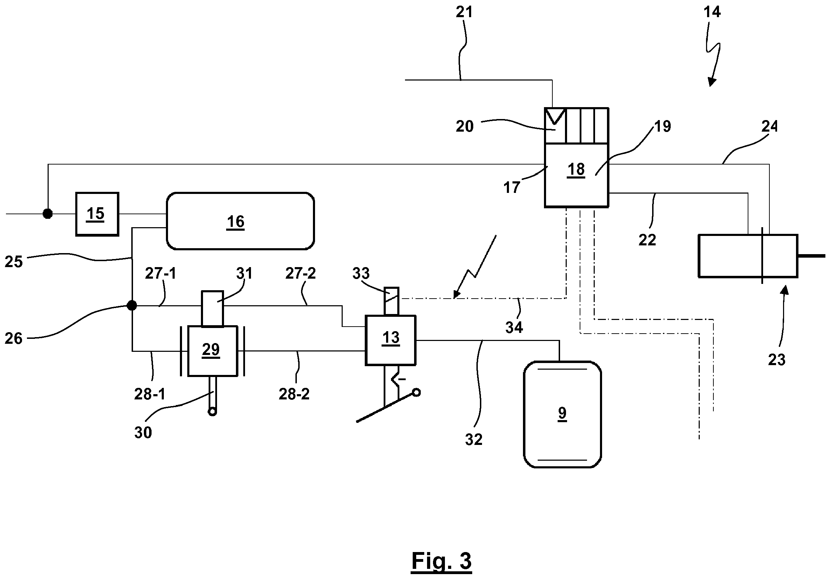

**Fig. 3** zeigt eine Luftfederanlage 14, in der über ein Mehrkreisschutzventil oder Überströmventil 15 eine Druckluftquelle, hier ein Behälter 16, mit Druckluft versorgt wird. Über eine Abzweigung stromaufwärts des Überströmventils 15 wird weiterhin Druckluft einem Vorratsanschluss 17 einer vorzugsweise elektronisch ausgebildeten Steuereinrichtung 18 zugeführt. In die Steuereinrichtung 18 kann eine ABS- oder EBS-Steuereinrichtung 19 integriert sein. Neben dem Druck an dem Vorratseingang 17 wird einem Steueranschluss 20 der Steuereinrichtung 18 ein Bremsdruck über eine Bremsleitung 21 zugeführt. Ausgangsseitig ist die Steuereinrichtung 19 über eine Betriebsbremsleitung 22 mit einer Betriebsbremskammer eines Kombi-Bremszylinders 23 sowie über eine Federspeicherbremsleitung 24 mit einer Federspeicherkammer des Kombi-Bremszylinders 23 verbunden.

Eine Vorratsbehälterleitung 25 verzweigt an einem Verzweigungspunkt 26 in eine Vorratsbehälterleitung 27-1, 27-2 zu dem Hebe-Senk-Ventil 13 sowie eine Niveauregelleitung 28-1, 28-2, die ebenfalls zu dem Hebe-Senk-Ventil 13 führt.

Zwischen die Teile 28-1 und 28-2 ist ein Niveauregelventil 29 zwischengeschaltet. Das Niveauregelventil 29 ist in an sich bekannter Weise über ein mechanisches Kopplungselement 30 derart mit Fahrzeugaufbau 3, Lenker 6, Achskörper 7, Fahrzeugrad 8 oder Luftfeder 9 gekoppelt, dass eine Veränderung des Niveaus 11 eine Veränderung der Betriebsstellung des Niveauregelventils zur Folge hat. Je nach vorliegendem Niveau 11 bewirkt das Niveauregelventil 29 eine Be- oder Entlüftung des Leitungsteils 28-2 der Niveauregelleitung 28.

Dem Niveauregelventil 29 ist eine Begrenzungseinrichtung 31 zugeordnet, die zwischen die Leitungsteile 27-1 und 27-2 der Vorratsbehälterleitung 27 zwischengeschaltet ist. Die Begrenzungseinrichtung 31 ist in an sich bekannter Weise ausgebildet und so mit dem Niveauregelventil 29 gekoppelt, das für das Erreichen eines oberen Schwellwerts für das Niveau 11 bei einem Heben des Fahrzeugaufbaus 3 mittels entsprechender Betätigung des Hebe-Senk-Ventils 13 die Verbindung zwischen den Leitungsteilen 27-1 und 27-2 durch die Begrenzungseinrichtung 31 gesperrt wird, während diese Verbindung vor dem Erreichen des oberen Schwellwerts offen ist.

Das Hebe-Senk-Ventil 13 besitzt eine Stellung "HEBEN", in welcher die Vorratsbehälterleitung 27 mit einer Luftfederleitung 32, die von dem Hebe-Senk-Ventil 13 zu der Luftfeder 9 führt, verbunden ist. Solange also der obere Schwellwert für das Niveau 11 noch nicht erreicht ist und sich das Schaltventil 13 in der Stellung "HEBEN" befindet, strömt Druckluft aus dem Behälter 16 über die Vorratsbehälterleitung 25, den Verzweigungspunkt 26, Leitungszweig 27-1 der Vorratsbehälterleitung 27, Begrenzungseinrichtung 31, Leitungszweig 27-2 der Vorratsbehälterleitung 27, Hebe-Senk-Ventil 13 und Luftfederleitung 32 zu der Luftfeder 9, was mit einem Anheben des Fahrzeugaufbaus und einer Vergrößerung des Niveaus 11 verbunden ist. Erreicht hingegen das Niveau 11 den oberen Schwellwert, schaltet die Begrenzungseinrichtung 31 um in die Sperrstellung, womit der Hebe-Vorgang beendet wird. Weiterhin besitzt das Hebe-Senk-Ventil 13 eine Stellung "SENKEN", in welcher über das Hebe-Senk-Ventil 13 die Luftfederleitung 32 entlüftet wird, was mit einer Entleerung der Luftfeder 9 und einem Absenken des Niveaus 11 verbunden ist. Schließlich kann das Hebe-Senk-Ventil 13 eine Stellung "STOPP" besitzen, in welcher die Luftfederleitung 32 abgesperrt ist, so dass die Druckluft in der Luftfeder 9 eingeschlossen ist. Weiterhin kann das Hebe-Senk-Ventil 13 eine Stellung "FAHRT" besitzen, die vorzugsweise automatisiert eingenommen wird, wenn indiziert ist, dass eine Aufnahme eines Fahrbetriebs erfolgt. In der Stellung "FAHRT" ist der Leitungszweig 28-2 der Niveauregelleitung 28 über das Hebe-Senk-Ventil verbunden mit der Luftfederleitung 32, so dass über die Luftfederleitung 32, das Hebe-Senk-Ventil 13, den Leitungszweig 28-2 und das Hebe-Senk-Ventil 29 automatisiert eine Regelung der Fahrhöhe möglichst auf ein konstantes Niveau erfolgen kann durch gezielte Be- und Entlüftung, die durch das Niveauregelventil 29 gesteuert wird.

Gemäß Fig. 3 besitzt das Hebe-Senk-Ventil 13 einen elektrischen Steueranschluss 33, der über eine elektrische Steuerleitung 34 von der Steuereinrichtung 18 und/oder 19 angesteuert wird. Beispielsweise kann über die Steuereinrichtung 19 bei Vorliegen eines eine Aufnahme eines Fahrbetriebs signalisierenden Signals der Steueranschluss 33 geeignet angesteuert werden, damit eine Überführung des Hebe-Senk-Ventils in die Stellung "FAHRT" erfolgt, was auch als "Reset-to-ride"-Funktion bezeichnet wird.

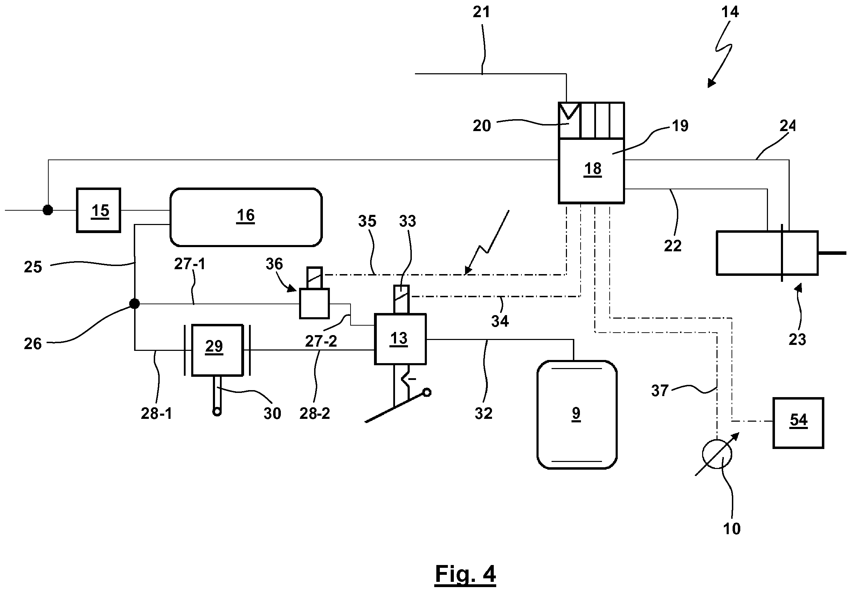

Für die erfindungsgemäße Ausführungsform der Luftfederanlage 14 gemäß **Fig. 4** ist die gestängegesteuerte Begrenzungseinrichtung 31 gemäß Fig. 3 entfallen. Stattdessen ist zwischen die Leitungszweige 27-1 und 27-2 der Vorratsbehälterleitung 27 eine über eine Steuerleitung 35 elektrisch betätigbare Ventileinrichtung 36 zwischengeschaltet. Im einfachsten Fall handelt es sich bei der Ventileinrichtung 36 um ein Sperrventil oder 2/2-Magnetventil mit einer Durchlassstellung und einer Sperrstellung. Ein Messsignal 37 eines Sensors 10 für das Niveau 11 des Anhängers 1 wird der Steuereinrichtung 18, 19 zugeführt. In der Steuereinrichtung 18, 19 erfolgt ein Vergleich des Messsignals 37 oder eines hieraus, ggf. unter Berücksichtigung weiterer Parameter, berechneten Signals, mit einem oberen Schwellwert, der mit dem maximalen Niveau des Anhängers korreliert. Wird für das Hebe-Senk-Ventil in der Stellung "HEBEN" von der Steuereinrichtung 18, 19 detektiert, dass das Messsignal 37 - oder ein hieraus ermitteltes Messsignal - den oberen Schwellwert erreicht, steuert die Steuereinrichtung 18, 19 über die Steuerleitung 35 die Ventileinrichtung 36 derart an, dass diese von einer Öffnungsstellung in eine Sperrstellung wechselt. Trotz Verzichts auf die Begrenzungseinrichtung 31 gemäß Fig. 3 kann damit eine entsprechende Funktionalität gewährleistet werden.

Abweichend zu der in Fig. 4 dargestellten Ausführungsform kann auch eine Verbindung der Leitungszweige 27-1 und 27-2 ohne Zwischenschaltung der Ventileinrichtung 36 erfolgen, während in diesem Fall die Ventileinrichtung 36 in die Luftfederleitung 32 integriert ist. Für eine derartige Ausführungsform kann die Ventileinrichtung auch die Luftfederleitung 32 absperren, wenn das Hebe-Senk-Ventil 13 in eine Stellung "SENKEN" verbracht ist und ein minimaler Schwellwert für das Messsignal 37 bezüglich des Niveaus 11 erreicht wird, womit eine Entlüftung der Luftfeder 9 durch die Ventileinrichtung 36 unterbrochen wird.

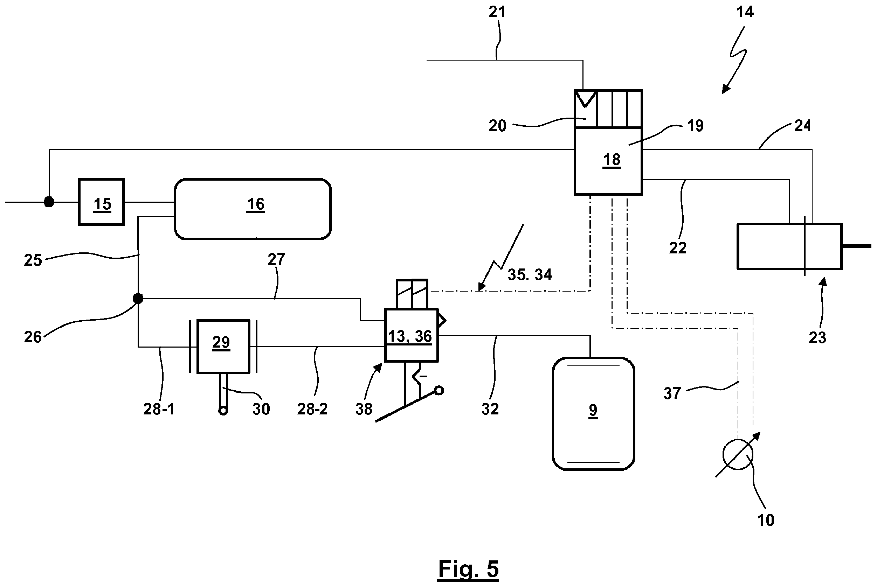

Für das in **Fig. 5** dargestellte Ausführungsbeispiel sind das Hebe-Senk-Ventil 13 und die Ventileinrichtung 36 zu einer Baueinheit 38 kombiniert.

Wird das Erreichen eines Schwellwerts für das Niveau 11 durch die Steuereinrichtung 18, 19 erkannt, kann die Steuereinrichtung 18, 19 über eine geeignete Steuerleitung eine Signaleinrichtung 54 beaufschlagen, die insbesondere haptisch, optisch oder akustisch dem Benutzer signalisiert, dass ein maximales und/oder minimales Niveau 11 erreicht ist.

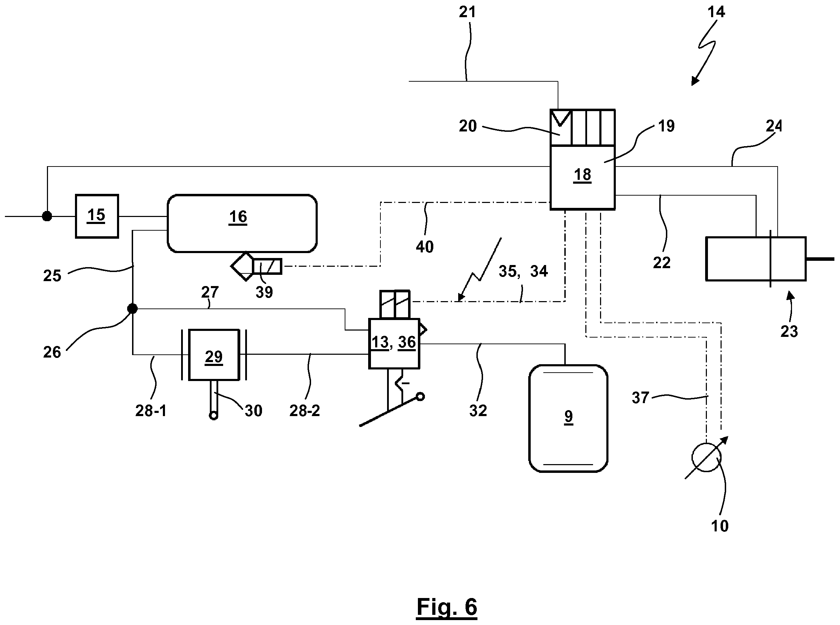

Gemäß **Fig. 6** kann in der erfindungsgemäßen Luftfederanlage 14 der Behälter 16 an einem tiefsten Punkt ein Entwässerungsventil 39 besitzen. Das Entwässerungsventil 39 wird über eine Steuerleitung 40 ebenfalls von der Steuereinrichtung 18 oder 19 angesteuert, wobei eine Ansteuerung des Entwässerungsventils 39 vorzugsweise nach einem durch die Steuereinrichtung 18, 19 erfassten Umfang der Betätigung des Hebe-Senk-Ventils 13, insbesondere nach einer vorgegebenen Anzahl von Hebe-Vorgängen oder einer kumulierten Zeitdauer der Hebe-Vorgänge, erfolgt.

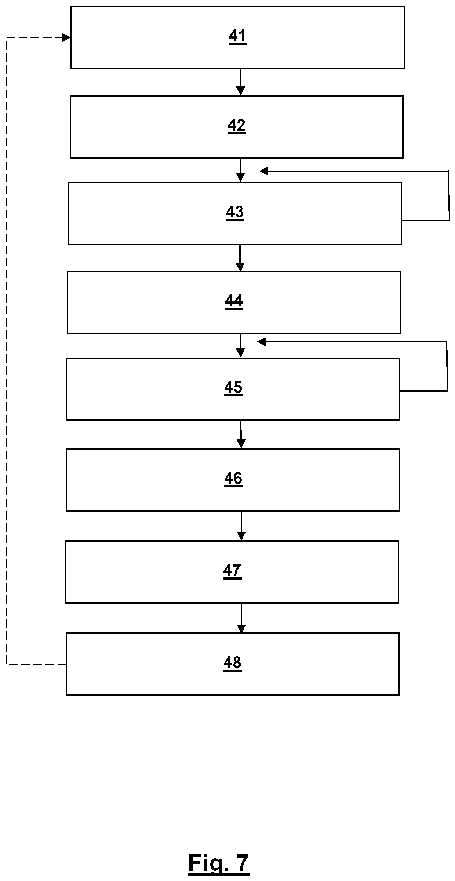

**Fig. 7** zeigt ein Verfahren zum Betrieb einer erfindungsgemäßen Luftfederanlage 14. In einem Verfahrensschritt 41 erfolgt eine Betätigung des Hebe-Senk-Ventils 13, die beispielhaft für die Darstellung des Verfahrens eine Herbeiführung der Schaltstellung "HEBEN" sein soll. In einem Verfahrensschritt 42 wird ein Messsignal 37 des Sensors 10 für das Niveau 11 erzeugt und der Steuereinrichtung 18, 19 zugeführt. In einem Verfahrensschritt 43 erfolgt in der Steuereinrichtung 18, 19 ein Vergleich des Messsignals 37 mit einem vorgegebenen Schwellwert, bei dem es sich für den beispielhaft gewählten Hebe-Vorgang um einen oberen Schwellwert handelt. Hat das Messsignal 37 den Schwellwert nicht erreicht, verzweigt das Verfahren zurück und der Hebe-Vorgang wird fortgesetzt. Erreicht hingegen das Messsignal 37 den Schwellwert, wird in einem Verfahrensschritt 44 durch die Steuereinrichtung 18, 19 die Ventileinrichtung 36 betätigt, indem für das angesprochene Beispiel die Befüllung der Luftfeder 9 unterbrochen wird, also die Ventileinrichtung 36 von einer geöffneten Stellung in eine Sperrstellung verbracht wird. In dieser Sperrstellung ist eine weitere Befüllung der Luftfeder 9 nicht möglich unabhängig davon, dass sich das Hebe-Senk-Ventil u. U. weiterhin in der Stellung "HEBEN" befindet. In einem Verfahrensschritt 45 kann überprüft werden, ob durch manuelle Betätigung das Hebe-Senk-Ventil 13 in die Stellung "SENKEN" verbracht worden ist. Ist dieses der Fall, kann in einem Verfahrensschritt 46 wiederum durch die Steuereinrichtung 18, 19 die Ventileinrichtung 36 angesteuert werden, so dass diese in eine Öffnungsstellung überführt wird, insbesondere wenn sich die Ventileinrichtung 36 abweichend zur Fig. 4 in der Luftfederleitung 32 befindet. In dem anschließenden Verfahrensschritt 47 kann dann ein Absenken des Niveaus 11 der Luftfeder 9 erfolgen durch gezielte Entlüftung der Luftfeder 9. In einem Verfahrensschritt 48 kann dann überprüft werden, ob sich eine Verringerung des Niveaus 11 auf einen weiteren Schwellwert oder um eine vorgegebene Distanz ergeben hat. Ist dieses der Fall, kann, wie in Fig. 7 mit dem gestrichelten Pfeil dargestellt, wieder ein Anheben des Fahrzeugaufbaus im Verfahrensschritt 41 erfolgen mit entsprechender Überwachung des Hebe-Vorgangs. Es kann aber auch weiter ein Senken des Fahrzeugaufbaus erfolgen, wobei entsprechend eine Überwachung erfolgen kann, ob das Niveau nun einen unteren Schwellwert unterschreitet.

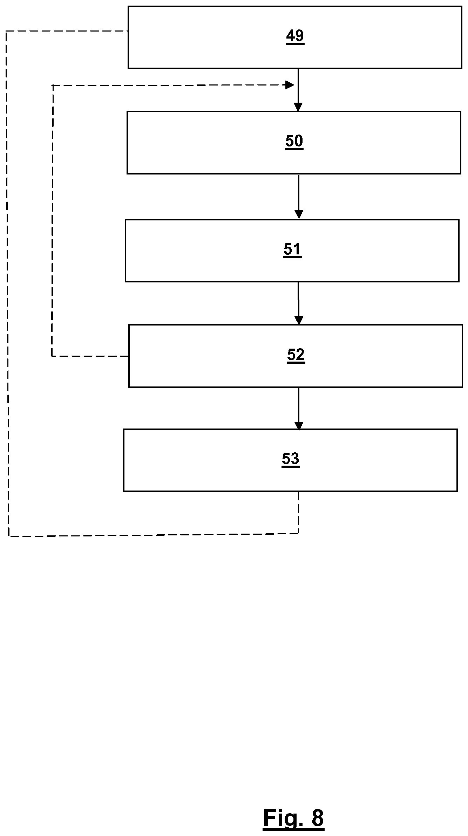

In **Fig. 8** ist beispielhaft ein Verfahrensablauf für die Ansteuerung des Entwässerungsventils 39 des Behälters 16 gemäß Fig. 6 dargestellt: zu Beginn eines derartigen Verfahrens wird zunächst in einem Verfahrensschritt 49 eine Art Zähler auf 0 gesetzt. Anschließend erfolgt in einem Verfahrensschritt 50 benutzergetriggert eine Betätigung des Hebe-Senk-Ventils 13, vorzugsweise für ein Heben des Fahrzeugaufbaus. In einem folgenden Verfahrensschritt 51 erfolgt eine Abschätzung des Umfangs der Betätigung des Hebe-Senk-Ventils 13. Bei dieser Abschätzung kann es sich im einfachsten Fall lediglich um eine Zählung der Betätigung der Hebe-Vorgänge handeln. Ebenfalls möglich ist, dass eine Zeitdauer der Hebe-Vorgänge erfasst wird oder eine Druckdifferenz während des Hebe-Vorgangs oder ein Druckluftvolumen, welches während des Hebe-Vorgangs strömt. Dieser Umfang der Betätigung wird für mehrere derartige Betätigungsvorgänge aufsummiert. In einem Verfahrensschritt 52 erfolgt ein Vergleich des aufsummierten Betätigungsumfangs mit einem Schwellwert hierfür. Dieser Schwellwert wird ermittelt anhand von Erfahrungswerten, wann üblicherweise eine Entwässerung durchzuführen ist. Ein derartiger Erfahrungswert kann beispielsweise herstellerseitig in dem Fahrzeug abgespeichert werden und von der Steuereinrichtung berücksichtigt werden. Wird anhand des Vergleichs in dem Verfahrensschritt 52 erkannt, dass der kritische Umfang der Betätigungen erreicht wird, wird ein Verfahrensschritt 53 ausgelöst, in welchem das Entwässerungsventil 39 durch die Steuereinrichtung 18, 19 angesteuert wird, um eine Entwässerung des Behälters 16 vorzunehmen. Hieran anschließend wird wieder zu dem Verfahrensschritt 49 zurückgekehrt, in welchem der Betätigungsumfang auf den Wert 0 gesetzt wird.
Die erfindungsgemäße Steuereinrichtung kann an beliebiger Stelle angeordnet sein. Beispielsweise kann die Steuereinrichtung im Bereich eines Anhängers für die Luftfederanlage eines Anhängers angeordnet sein.

**BEZUGSZEICHENLISTE**

| | | | |
|---|---|---|---|
| 1 | Anhänger | 31 | Begrenzungseinrichtung |
| 2 | Achse | 32 | Luftfederleitung |
| 3 | Fahrzeugaufbau | 33 | Steueranschluss |
| 4 | Haltebock | 34 | Steuerleitung |
| 5 | Schwenkachse | 35 | Steuerleitung |
| 6 | Lenker | 36 | Ventileinrichtung |
| 7 | Achskörper | 37 | Messsignal |
| 8 | Fahrzeugrad | 38 | Baueinheit |
| 9 | Luftfeder | 39 | Entwässerungsventil |
| 10 | Sensor | 40 | Steuerleitung |
| 11 | Niveau | 41 | Verfahrensschritt |
| 12 | Fahrbahn | 42 | Verfahrensschritt |
| 13 | Hebe-Senk-Ventil | 43 | Verfahrensschritt |
| 14 | Luftfederanlage | 44 | Verfahrensschritt |
| 15 | Überströmventil | 45 | Verfahrensschritt |
| 16 | Behälter | 46 | Verfahrensschritt |
| 17 | Vorratseingang | 47 | Verfahrensschritt |
| 18 | Steuereinrichtung | 48 | Verfahrensschritt |
| 19 | ABS-Steuereinrichtung | 49 | Verfahrensschritt |
| 20 | Steuereingang | 50 | Verfahrensschritt |
| 21 | Bremsleitung | 51 | Verfahrensschritt |
| 22 | Betriebsbremsleitung | 52 | Verfahrensschritt |
| 23 | Kombi-Bremszylinder | 53 | Verfahrensschritt |
| 24 | Federspeicherbremsleitung | 54 | Signaleinrichtung |
| 25 | Vorratsbehälterleitung | | |
| 26 | Verzweigungspunkt | | |
| 27 | Vorratsbehälterleitung | | |
| 28 | Niveauregelleitung | | |
| 29 | Niveauregelventil | | |
| 30 | Kopplungselement | | |

## Patentansprüche

1. Anhänger-Luftfederanlage (14) mit einem manuell betätigten Hebe-Senk-Ventil (13) zum willkürlichen Heben und Senken eines Niveaus (11) eines Fahrzeugaufbaus (3), über welches zum Heben eine Druckluftquelle und zum Senken eine Druckluftsenke mit einer Luftfeder (9) verbindbar sind,
wobei
a) stromaufwärts des Hebe-Senk-Ventils (13) ein Niveauregelventil (29) angeordnet ist
b) einer elektronischen Steuereinrichtung (18; 19) ein Messsignal (37) des Niveaus (11) zugeführt ist,
c) eine von der Steuereinrichtung (18; 19) ansteuerbare Ventileinrichtung (36) vorgesehen ist, die derart ausgebildet und in die Anhänger-Luftfederanlage (14) integriert ist, dass über diese eine Änderung des Niveaus (11) beeinflussbar ist,
d) in der Steuereinrichtung (18; 19) das Messsignal (37) des Niveaus (11) mit Schwellwerten für ein maximales Niveau und/oder ein minimales Niveau vergleichbar ist,
e) ausgelöst durch ein Erreichen eines Schwellwerts die Ventileinrichtung (36) durch die Steuereinrichtung (18; 19) so ansteuerbar ist, dass
ea) eine weitere Veränderung des Niveaus nicht erfolgt oder
eb) eine Änderung des Niveaus von dem Schwellwert weg erfolgt.

2. Anhänger-Luftfederanlage (14) nach Anspruch 1, **dadurch gekennzeichnet, dass** nach dem Erreichen eines Schwellwerts und dem Auslösen einer Ansteuerung der Ventileinrichtung (36) durch die Steuereinrichtung (18; 19) derart, dass eine weitere Veränderung des Niveaus (11) nicht erfolgt, in der Steuereinrichtung (18; 19) bei dem Vorliegen eines Indikators, dass eine Veränderung des Niveaus (11) derart gewünscht ist, dass sich das Niveau (11) von dem erreichten Schwellwert wieder weg bewegen soll, die Ventileinrichtung (36) durch die Steuereinrichtung (18; 19) so ansteuerbar ist, dass eine weitere Veränderung des Niveaus (11) wieder erfolgen kann.

3. Anhänger-Luftfederanlage (14) nach einem der vorhergehenden Ansprüche, **dadurch gekennzeichnet, dass** die Ventileinrichtung (36) in eine Leitung (Luftfederleitung 32) zwischen Hebe-Senk-Ventil (13) und Luftfeder (9) zwischengeschaltet ist.

4. Anhänger-Luftfederanlage (14) nach einem der Ansprüche 1 bis 2, **dadurch gekennzeichnet, dass** die Ventileinrichtung (36) in einer Vorratsbehälterleitung (27) angeordnet ist, die die Druckluftquelle mit dem Hebe-Senk-Ventil (13) verbindet.

5. Anhänger-Luftfederanlage (14) nach einem der vorhergehenden Ansprüche, **dadurch gekennzeichnet, dass** die Ventileinrichtung (36) mit dem Hebe-Senk-Ventil (13) eine Baueinheit (38) bildet.

6. Anhänger-Luftfederanlage (14) nach einem der vorhergehenden Ansprüche, **dadurch gekennzeichnet, dass** die Druckluftquelle mit einem Behälter (16) gebildet ist, der ein von der Steuereinrichtung (18; 19) ansteuerbares Entwässerungsventil (39) besitzt.

7. Anhänger-Luftfederanlage (14) nach Anspruch 6, **dadurch gekennzeichnet, dass** in der Steuereinrichtung (18; 19) der Umfang der durch das Niveauregelventil (29) und/oder das Hebe-Senk-Ventil (13) ausgelösten Hebevorgänge erfasst wird und eine Ansteuerung des Entwässerungsventils (39) durch die Steuereinrichtung (18; 19) zur Entwässerung in Abhängigkeit des erfassten Umfangs der Hebevorgänge erfolgt.

8. Anhänger-Luftfederanlage (14) nach Anspruch 6 oder 7, **dadurch gekennzeichnet, dass** das Entwässerungsventil (39) stromlos geschlossen ist oder stromlos in eine pneumatische Rückfallebene zurückkehrt.

9. Anhänger-Luftfederanlage (14) nach einem der vorhergehenden Ansprüche, **dadurch gekennzeichnet, dass** die Steuereinrichtung als ABS- oder EBS-Steuereinrichtung (19) ausgebildet ist.

10. Anhänger-Luftfederanlage (14) nach einem der Patentansprüche 1 bis 9, **dadurch gekennzeichnet, dass** ausgelöst durch ein Erreichen eines Schwellwerts die Steuereinrichtung (18; 19) eine Signaleinrichtung (54) derart ansteuert, dass dem Benutzer signalisiert wird, dass ein Schwellwert des Niveaus erreicht ist.

## Claims

1. Trailer air suspension system (14) comprising a manually actuated lifting-lowering valve (13) for an arbitrary lifting and lowering of a level (11) of a vehicle body (3) by which it is possible to connect a compressed air source to an air spring (9) for lifting and to connect a compressed air sink to the air spring (9) for lowering,
a) a level control valve (29) being arranged upstream from the lifting-lowering valve (13),
b) a measurement signal (37) of the level (11) being fed to an electronic control device (18; 19),
c) a valve device (36) being provided which is controllable by the control device (18; 19) and being designed and integrated into the trailer air suspension system (14) such that it is possible to influence the change of the level (11),
d) the measurement signal (37) of the level (11) being comparable to a threshold for a maximum level and/or a minimum level in the control device (18; 19),
e) triggered by an approaching of the threshold, the valve device (36) being controllable by the control device (18; 19) such that
ea) another change of the level does not take place or
eb) the level changes away from the threshold.

2. Trailer air suspension system (14) of claim 1, **characterised in that** after the approaching of the threshold and the triggering of the control of the valve device (36) by the control device (18; 19) such that there is no further change of the level in the control device (18; 19) with the presence of an indicator that a change of the level (11) is desired such that the level (11) should again move away from the approached threshold, the valve device (36) can be controlled by the control device (18; 19) such that again another change of the level (11) is possible.

3. Trailer air suspension system (14) of one of the preceding claims, **characterised in that** the valve device (36) is interposed in a line (air spring line 32) between the lifting-lowering valve (13) and the air spring (9).

4. Trailer air suspension system (14) of one of claims 1 to 2, **characterised in that** the valve device (36) is arranged in a supply reservoir line (27) which connects the compressed air source to the lifting-lowering valve (13).

5. Trailer air suspension system (14) of one of the preceding claims, **characterised in that** the valve device (36) forms a constructional unit (38) together with the lifting-lowering valve (13).

6. Trailer air suspension system (14) of one of the preceding claims, **characterised in that** the compressed air source comprises a reservoir (16) which comprises a drain valve (39) which is controllable by the control device (18; 19).

7. Trailer air suspension system (14) of claim 6, **characterised in that** in the control device (18; 19) the extend of the lifting processes triggered by the level control valve (29) and/or the lifting-lowering valve (13) is sensed and the drain valve (39) is controlled by the control device (18; 19) for draining in dependence on the sensed extent of the lifting processes.

8. Trailer air suspension system (14) of claim 6 or 7, **characterised in that** the drain valve (39) is closed in the non-energised state or returns into a pneumatic fall-back state in a non-energised state.

9. Trailer air suspension system (14) of one of the preceding claims, **characterised in that** the control device is an ABS or EBS control device (19).

10. Trailer air suspension system (14) of one of claims 1 to 9, **characterised in that** triggered by an approaching of a threshold the control device (18; 19) controls a signalling device (54) such that it is signalised to the user that a threshold of the level has been approached.

## Revendications

1. Installation d'amortissement pneumatique de remorque (14) avec une soupape de levage/abaissement manuelle (13) pour le levage et l'abaissement arbitraire d'un niveau (11) d'une structure de véhicule (3), par l'intermédiaire de laquelle, pour le levage, une source d'air comprimé et, pour l'abaissement, une source négative d'air comprimé, peuvent être reliées avec une suspension pneumatique (9),
a) une soupape de régulation de niveau (29) étant disposée en amont de la soupape de levage/abaissement (13),
b) un signal de mesure (37) du niveau (11) étant introduit dans un dispositif de commande électronique (18; 19),
c) un dispositif à soupape (36), pouvant être contrôlé par le dispositif de commande (18; 19), est prévu, qui est conçu et intégré dans l'installation d'amortissement pneumatique (14) de façon à permettre une modification du niveau (11),
d) dans le dispositif de commande (18; 19), le signal de mesure (37) du niveau (11) peut être comparé avec des valeurs de seuil pour un niveau maximum et/ou un niveau minimum,
e) lorsqu'une une valeur seuil est atteinte, le dispositif à soupape (36) peut être contrôlé par le dispositif de commande (18; 19) de façon à ce que
ea) une modification supplémentaire du niveau n'ait pas lieu ou
eb) une modification du niveau loin de la valeur seuil ait lieu.

2. Installation d'amortissement pneumatique de remorque (14) selon la revendication 1, **caractérisée en ce que**, lorsqu'une valeur seuil est atteinte et lorsqu'un contrôle du dispositif à soupape (36) par le dispositif de commande (18; 19) est déclenché de façon à ce qu'une modification supplémentaire du niveau (11) n'ait pas lieu, dans le dispositif de commande (18; 19), lors de la présence d'un indicateur, une modification du niveau (11) est souhaitée, de façon à ce que le niveau (11) doive s'éloigner à nouveau de la valeur seuil atteinte, le dispositif à soupape (36) peut être contrôlé par le dispositif de commande (18; 19) de façon à ce qu'une modification supplémentaire du niveau (11) puisse à nouveau avoir lieu.

3. Installation d'amortissement pneumatique de remorque (14) selon l'une des revendications précédentes, **caractérisée en ce que** le dispositif à soupape (36) est intercalée dans une ligne (ligne d'amortissement pneumatique (32) entre une soupape de levage/abaissement (13) et une suspension pneumatique (9).

4. Installation d'amortissement pneumatique de remorque (14) selon l'une des revendications 1 à 2, **caractérisée en ce que** le dispositif à soupape (36) est disposé dans une ligne de réservoir (27) qui relie la source d'air comprimé avec la soupape de levage/abaissement (13).

5. Installation d'amortissement pneumatique de remorque (14) selon l'une des revendications précédentes, **caractérisée en ce que** le dispositif à soupape (36) forme, avec la soupape de levage/abaissement (13), un module (38).

6. Installation d'amortissement pneumatique de remorque (14) selon l'une des revendications précédentes, **caractérisée en ce que** la source d'air comprimé est constituée d'un récipient (16) qui comprend une soupape de drainage (39) pouvant être contrôlée par le dispositif de commande (18; 19).

7. Installation d'amortissement pneumatique de remorque (14) selon la revendication 6, **caractérisée en ce que**, dans le dispositif de commande (18; 19), l'étendue des processus de levage déclenchés par la soupape de régulation de niveau (29) et/ou la soupape de levage/abaissement (13) est mesurée et un contrôle de la soupape de drainage (39) a lieu par le dispositif de commande (18; 19) pour le drainage en fonction de l'étendue mesurée des processus de levage.

8. Installation d'amortissement pneumatique de remorque (14) selon la revendication 6 ou 7, **caractérisée en ce que** la soupape de drainage (39) est fermée sans courant ou retourne sans courant vers un niveau de repli.

9. Installation d'amortissement pneumatique de remorque (14) selon l'une des revendications précédentes, **caractérisée en ce que** le dispositif de commande est conçu comme un dispositif de commande ABS ou EBS (19).

10. Installation d'amortissement pneumatique de remorque (14) selon l'une des revendications 1 à 9, **caractérisée en ce que**, lorsqu'une valeur seuil est atteinte, le dispositif de commande (18; 19) contrôle un dispositif de signalisation (54) de façon à signaler à l'utilisateur qu'une valeur seuil du niveau est atteinte.
